# EUROPEAN PATENT APPLICATION

(11) **EP 4 815 211 A1**
(43) Date of publication of application: **30.09.2026**
(21) Application number: 26165070.9
(22) Date of filing: 16.03.2026
(51) Int. Cl.: H01R 13/00, G06F 1/183, G06F 1/18

(54) **INTEGRATED ELECTRICAL CONNECTION DEVICE, POWER DISTRIBUTION UNIT, ELECTRIC DRIVE SYSTEM AND VEHICLE**

(30) Priority: 24.03.2025 CN 202510352148
(71) Applicant: Valeo Electrification, 95892 Cergy Pontoise (FR)
(72) Inventor: FENG, Guojin, 91056 Erlangen (DE); QU, Gongyuan, 91056 Erlangen (DE); JIANG, Yanxun, 91056 Erlangen (DE)
(74) Representative: Valeo Powertrain Systems

(57) **Abstract**

The present disclosure provides an integrated electrical connection device for a power distribution unit, the power distribution unit including a housing, multiple interfaces arranged on the housing, and multiple electrical components arranged in the housing, the integrated electrical connection device being arranged in the housing and electrically connecting the multiple interfaces to the multiple electrical components, wherein the integrated electrical connection device includes: busbar assemblies forming multiple layers, the busbar assembly forming each layer including at least one busbar; and an insulating film, arranged between busbar assemblies forming adjacent layers; wherein a busbar of one layer of the busbar assemblies forming multiple layers, and a busbar of another adjacent layer of the busbar assemblies forming multiple layers, at least partially overlap each other and have opposite current directions. The present disclosure further provides a power distribution unit, an electric drive system and a vehicle.

## Description

### Technical Field

The present disclosure relates to an integrated electrical connection device, a power distribution unit comprising an integrated electrical connection device, an electric drive system comprising a power distribution unit, and a vehicle comprising an electric drive system.

### Background Art

As the state pushes forward with energy conservation and emissions reduction while demanding control of atmospheric pollution, motor vehicles with electric drive systems have a rapidly growing market, and are set to become a mainstream product in the future motor vehicle market; examples include fuel cell electric vehicles, battery electric vehicles and hybrid electric vehicles. Electric drive systems are becoming more and more integrated as vehicles develop. Onboard chargers (OBC), direct current converters (DCDC), inverters, power distribution units (PDU), high-voltage DC power supplies (HCDC), fuses, relays, electric heaters (PTC), fast chargers and compressor controllers, etc. are important components of electric drive systems.

At present, the majority of power distribution units in electric drive systems employ point-to-point busbar connections or cable connections. In one known solution, a power distribution unit uses 6 types of copper busbars stacked on top of each other, and uses a support for fixing the busbars and fuses, so as to achieve point-to-point connections between components. In addition, in that solution, a large safe distance needs to be left for each busbar for insulation purposes, while attention must also be paid to the assembly sequence and directions of the busbars. Such a solution has the issues of complex design, disordered wiring, parasitic inductance in circuits, and high temperature rises, and also uses a large amount of material, resulting in a more complex assembly process.

### Summary of the Invention

Thus, an objective of the present disclosure is to provide an integrated electrical connection device for a power distribution unit, a power distribution unit, an electric drive system and a vehicle, wherein the integrated electrical connection device employs a layered design, optimizing circuit layout and connections, reducing the safe distance between busbars, and thereby being simple and compact in structure and easy to assemble, with low parasitic inductance and high reliability.

The abovementioned objective is achieved by means of an integrated electrical connection device for a power distribution unit, a power distribution unit, an electric drive system and a vehicle, which are described below.

The present disclosure provides an integrated electrical connection device for a power distribution unit, the power distribution unit comprising a housing, multiple interfaces arranged on the housing, and multiple electrical components arranged in the housing, the integrated electrical connection device being arranged in the housing and electrically connecting the multiple interfaces to the multiple electrical components, wherein the integrated electrical connection device comprises: busbar assemblies forming multiple layers, the busbar assembly forming each layer comprising at least one busbar; and an insulating film, arranged between busbar assemblies forming adjacent layers; wherein a busbar of one layer of the busbar assemblies forming multiple layers, and a busbar of another adjacent layer of the busbar assemblies forming multiple layers, at least partially overlap each other and have opposite current directions. Such a stacked structure, in which busbars alternate with insulating material, increases the degree of integration, and busbar assemblies forming different layers can support each other, so a plastic support for the busbars can be eliminated, thus lowering costs. In addition, such a structure can be installed in place in a single operation, reducing the number of assembly steps and avoiding the issue of assembly mistakes caused by an assembly sequence, thus further lowering costs. Further, such a structure reduces the inductance effect between adjacent circuits, improving system safety and reliability.

The integrated electrical connection device according to the present disclosure may also have one or more of the following features individually or in combination.

In an embodiment, the insulating film is adhesively bonded to a busbar assembly forming a corresponding layer.

In an embodiment, at least one layer of the busbar assemblies forming multiple layers further comprises an insulating plate.

In an embodiment, the insulating plate is arranged between busbars of a busbar assembly forming a corresponding layer. Such a configuration can realize insulation between the different busbars of the busbar assembly forming the same layer.

In an embodiment, the insulating plate partially overlaps at least one busbar of a busbar assembly forming an adjacent layer. Such a configuration can support the busbar of the busbar assembly forming the adjacent layer.

In an embodiment, the integrated electrical connection device further comprises an electrical connector, for electrically connecting the busbar to the electrical component.

In an embodiment, the electrical connector comprises a connecting hole.

In an embodiment, the electrical connector comprises a connecting boss.

In an embodiment, a busbar of each layer of the busbar assemblies forming multiple layers has an exposed terminal electrically connected to the interface.

This manner of connection promotes a simple and compact structure of the integrated electrical connection device, lowering costs.

The present disclosure further provides a power distribution unit, comprising the integrated electrical connection device described above.

In an embodiment, the electrical components comprise a relay and a fuse.

The present disclosure further provides an electric drive system, comprising the power distribution unit described above.

The present disclosure further provides a vehicle, comprising the electric drive system described above.

### Brief Description of the Drawings

A better understanding of the advantages and objective of the present disclosure can be gained from the preferred embodiments of the present disclosure described in detail below with reference to the drawings. To better illustrate the relationships among components in the drawings, the drawings are not drawn to scale. In the drawings:
Fig. 1 is a schematic drawing of part of a power distribution unit comprised in an electric drive system of a vehicle according to the present disclosure;
Fig. 2 is a schematic drawing of part of a power distribution unit according to an embodiment of the present disclosure, showing an integrated electrical connection device and electrical components of the power distribution unit;
Fig. 3 is a schematic drawing of an integrated electrical connection device of a power distribution unit according to an embodiment of the present disclosure;
Fig. 4 is an exploded schematic drawing of an integrated electrical connection device according to an embodiment of the present disclosure, in which busbars are shown in a dark colour;
Fig. 5 is a sectional drawing of an integrated electrical connection device according to an embodiment of the present disclosure;
Fig. 6 is a top view of an integrated electrical connection device according to an embodiment of the present disclosure;
Fig. 7 is a top view of part of an integrated electrical connection device according to an embodiment of the present disclosure, with a top insulating film removed;
Fig. 8 is a top view of part of an integrated electrical connection device according to an embodiment of the present disclosure, with a top insulating film and a busbar assembly forming an upper layer removed;
Fig. 9 is a top view of part of an integrated electrical connection device according to an embodiment of the present disclosure, with a top insulating film, a busbar assembly forming an upper layer, and a middle insulating film removed; and
Fig. 10 is a top view of part of an integrated electrical connection device
according to an embodiment of the present disclosure, with only a bottom insulating film remaining.

### Detailed Description of the Invention

In order to clarify the objective, technical solution and advantages of the present disclosure, the technical solution of embodiments of the present disclosure is described clearly and completely below in conjunction with the drawings accompanying particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects and equivalents thereof listed after the word, without excluding other elements or objects. Words such as "connection" or "communication", rather than being limited to the physical or mechanical connection or communication shown in a drawing, may include connection or communication equivalent thereto, irrespective of whether it is direct or indirect. "Upper", "lower", "left", "right", etc. are merely used to indicate a relative positional relationship; when the absolute position of a described object changes, the relative positional relationship may also change accordingly.

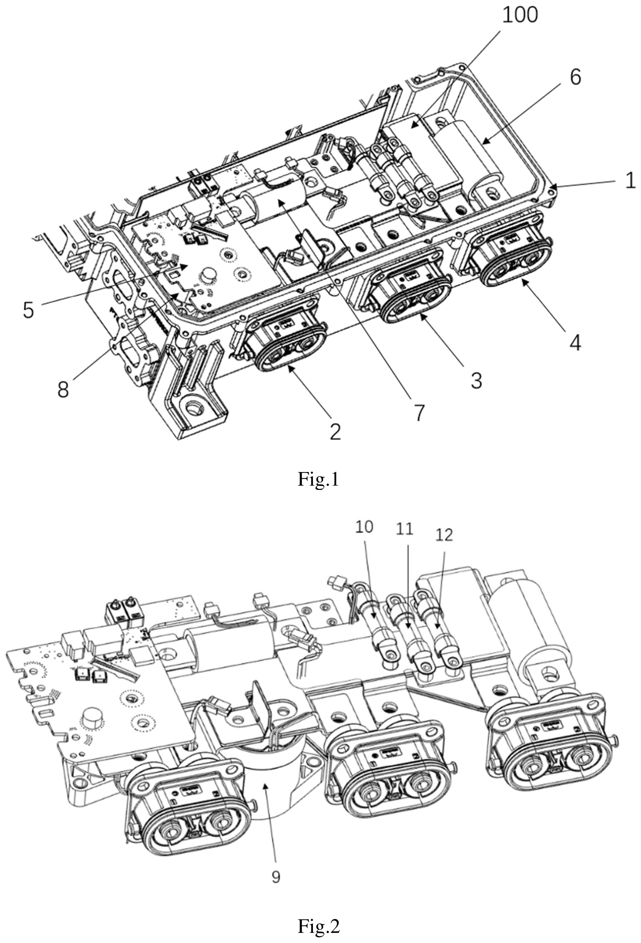

Embodiments of the present disclosure are described in detail below with reference to Figs. 1 - 10.

An electric drive system according to the present disclosure may comprise an electric motor, an on-board charger, a power distribution unit as shown in Fig. 1, a DC converter, etc. In addition, the electric drive system may also comprise a speed reducer, an inverter, etc. The onboard charger converts high-voltage AC to high-voltage DC, the inverter converts high-voltage DC to three-phase AC, and the power distribution unit provides charging/discharging control, electric control of high-voltage components, etc.

As shown in Figs. 1 and 2, the power distribution unit comprises a housing 1, multiple interfaces 2, 3, 4 provided on the housing 1, multiple electrical components 5, 6, 7, 8, 9, 10, 11, 12 provided in the housing 1, and an integrated electrical connection device 100 provided in the housing 1.

The multiple interfaces 2, 3, 4 may be arranged on the same side wall of the housing 1. For example, interface 2 is a fast charging interface, for electrically connecting to the on-board charger of the vehicle. For example, interface 3 is a battery interface, for electrically connecting to a battery pack of the vehicle. For example, interface 4 is an MCU interface, for electrically connecting to an MCU (microcontroller unit) of the vehicle, e.g. an inverter. In addition, other interfaces are also provided on the housing 1 of the power distribution unit, e.g. a DC input interface, a high-voltage DC interface, a signal interface, a compressor interface, a PTC interface, etc. These other interfaces may be arranged on the same side wall, for example, a side wall adjacent to the side wall on which the multiple interfaces 2, 3, 4 are located, e.g. the left side wall shown in Fig. 1.

For example, the multiple electrical components may comprise a relay, a fuse, a circuit board, etc. For example, in Fig. 1, "5" represents a circuit board, "6" and "7" represent fuses, and "8" represents a relay; in Fig. 2, "9" represents a relay, and "10", "11" and "12" represent fuses. The fuse is a common fuse for example, containing a fuse wire that will break by melting due to overheating, thereby breaking the circuit.

The integrated electrical connection device 100 is used to electrically connect the multiple interfaces 2, 3, 4 to the multiple electrical components 5, 6, 7, 8, 9, 10, 11, 12. For example, the integrated electrical connection device 100 electrically connects interface 2 to electrical components 8 and 9 in the form of relays and electrical component 7 in the form of a fuse, interface 3 to electrical components 10, 11, 12 in the form of fuses, and interface 4 to electrical components 6, 7, 10, 11, 12 in the form of fuses. The specific connections may vary with the application, and the present invention is not limited in this regard.

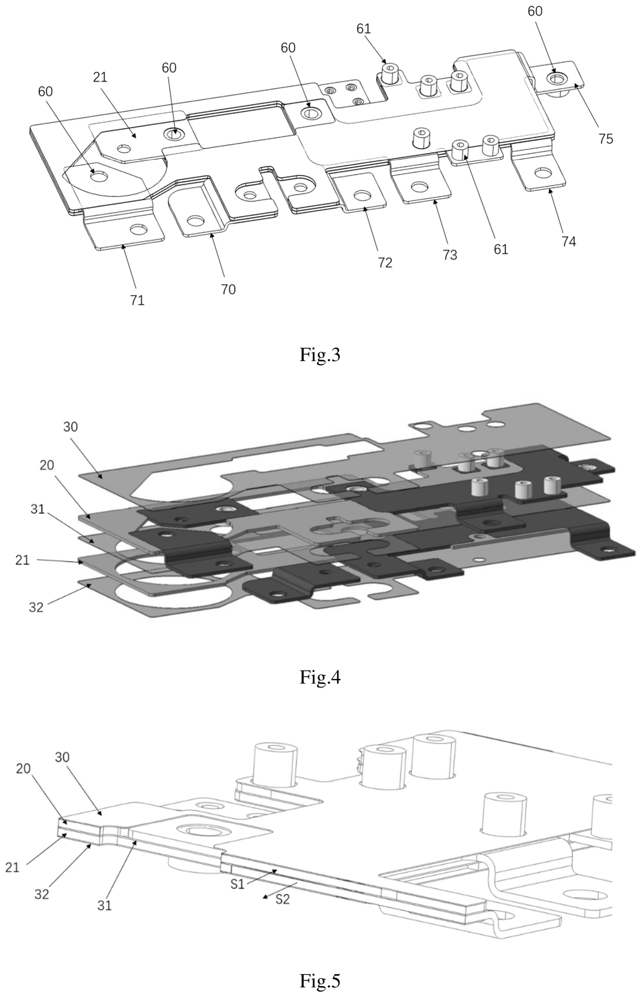

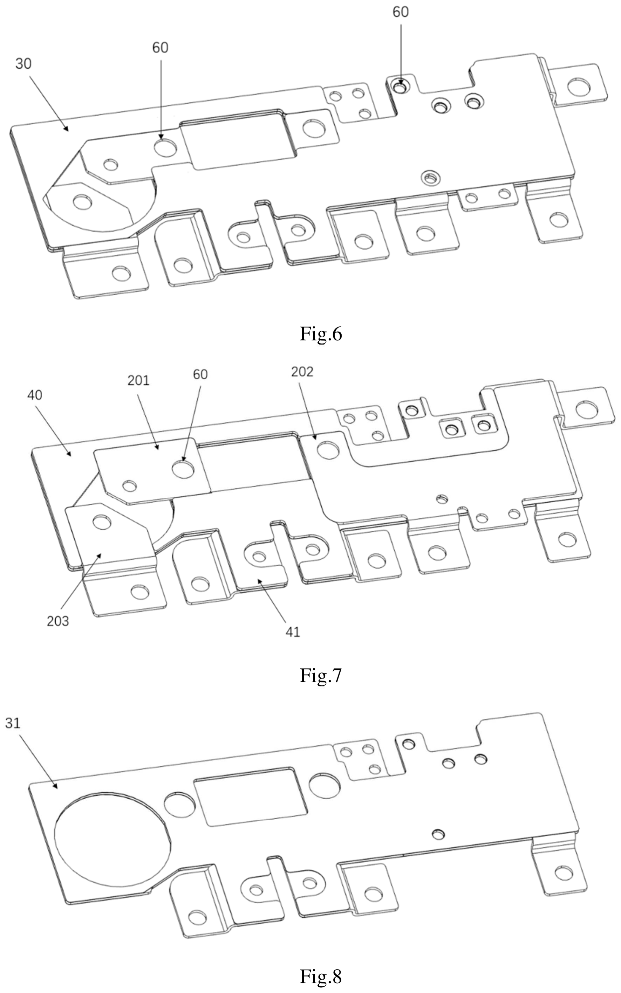

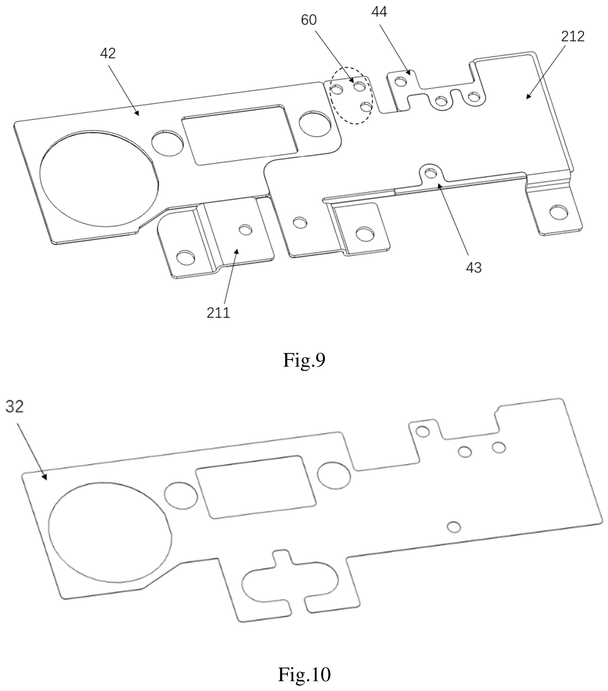

As shown in Figs. 3 and 4, the integrated electrical connection device 100 comprises busbar assemblies 20, 21 forming multiple layers, and an insulating film 31. The number of layers formed by the busbar assemblies can be any natural number greater than 2, while the number of insulating films can be any natural number greater than 1; the present disclosure imposes no restrictions in this regard. The busbar assembly forming each layer comprises at least one busbar. For example, as shown in Fig. 7, busbar assembly 20 forming an upper layer comprises busbars 201, 202, 203; and as shown in Fig. 9, busbar assembly 21 forming a lower layer comprises busbars 211, 212. The present disclosure imposes no restrictions on the number of busbars comprised in the busbar assembly forming each layer. In addition, the busbars comprised in the busbar assembly forming each layer are separated from each other, and may all have a flat shape. The insulating film 31 is arranged between busbar assemblies forming adjacent layers. For example, the insulating film 31 is arranged between busbar assembly 20 forming the upper layer and busbar assembly 21 forming the lower layer, so as to insulate the two busbar assemblies. In addition, the integrated electrical connection device 100 also comprises other insulating films 30 and 32, which at least partially cover a first surface and a second surface of the integrated electrical connection device 100 which are opposite each other, specifically a top surface and a bottom surface. For example, insulating film 30 is arranged on a surface of busbar assembly 20 that faces away from the insulating film 31, so as to at least partially cover the top surface of the integrated electrical connection device 100. For example, insulating film 30 is arranged on a surface of busbar assembly 21 that faces away from the insulating film 31, so as to at least partially cover the bottom surface of the integrated electrical connection device 100. It should be noted that the terms "top" and "bottom", as used herein, are in relation to the integrated electrical connection device shown in the figures, and are interchangeable. The busbar assemblies forming different layers are electrically insulated from each other by the insulating film 31; the integrated electrical connection device 100 is electrically insulated from external components by the other insulating films 30 and 32.

Such a stacked structure in the present disclosure increases the degree of integration, and busbar assemblies forming different layers can support each other, so a plastic support for the busbars can be eliminated, thus lowering costs. In addition, such a structure can be installed in place in a single operation, reducing the number of assembly steps and avoiding the issue of assembly mistakes caused by an assembly sequence, thus further lowering costs.

In embodiments of the present disclosure, a busbar of one layer of the busbar assemblies 20, 21 forming multiple layers, and a busbar of another adjacent layer of the busbar assemblies forming multiple layers, at least partially overlap each other and have opposite current directions. As shown in Figs. 4, 5, 7 and 9, busbar 202 of busbar assembly 20 and busbar 212 of busbar assembly 21 at least partially overlap each other and have opposite current directions; arrows are used in Fig. 5 to show schematically that a current direction S1 in busbar 202 is opposite to a current direction S2 in busbar 212. Such a configuration can greatly reduce the inductance effect between adjacent circuits, reducing circuit losses and voltage fluctuation, increasing power supply stability and conversion efficiency, and can also reduce the effect of electromagnetic force on elements, preventing the issue of poor contact, and improving system safety and reliability.

For example, the respective busbars of busbar assemblies 20, 21 can be realized using thin and wide metal plates, as shown in Figs. 4, 7 and 9. For example, the busbars may be made of copper plate. Such a configuration, in which thin and wide plates are stacked together, reduces parasitic inductance and impedance, and has better heat dissipation performance.

The insulating film 31 may be adhesively bonded to the busbar assemblies forming the corresponding layers, for example, to a bottom surface of busbar assembly 20 and a top surface of busbar assembly 21. The other insulating films 30, 32 may also be adhesively bonded to the busbar assemblies forming the corresponding layers. For example, insulating films 30, 31, 32 may each be adhesively bonded to the busbar assemblies forming the corresponding layers by means of an adhesive.

For example, insulating films 30, 31, 32 may be made of a dielectric material.

As shown in Figs. 4, 7 and 9, at least one layer of the busbar assemblies 20, 21 forming multiple layers further comprises an insulating plate. For example, as shown in Fig. 7, busbar assembly 20 forming the upper layer comprises insulating plates 40, 41; busbar assembly 21 forming the lower layer comprises insulating plates 42, 43, 44. Again referring to Fig. 4, insulating plates 40, 41 lie in substantially the same horizontal plane as busbars 201, 202, 203 of busbar assembly 20; and insulating plates 42, 43, 44 lie in substantially the same horizontal plane as busbars 211, 212 of busbar assembly 21.

As shown in Fig. 7, insulating plates 40, 41 are arranged between busbars 201, 202, 203 of busbar assembly 20 forming the corresponding layer; specifically, insulating plate 40 is arranged between busbars 201 and 202 and between busbars 201 and 203, and insulating plate 41 is arranged between busbars 202 and 203. As shown in Fig. 9, insulating plate 42 is arranged between busbars 211 and 212 of busbar assembly 21 forming the corresponding layer. Such a configuration of the insulating plates can realize insulation between different busbars of a busbar assembly forming the same layer.

The insulating plate may partially overlap at least one busbar of the busbar assembly forming an adjacent layer. Referring to Figs. 4 and 9, insulating plate 42 of busbar assembly 21 forming the lower layer partially overlaps busbars 201, 202, 203 of busbar assembly 20 forming the upper layer; and insulating plate 43 of busbar assembly 21 forming the lower layer partially overlaps busbar 202 of busbar assembly 20 forming the upper layer. Referring to Figs. 4 and 7, insulating plate 41 of busbar assembly 20 forming the upper layer partially overlaps busbar 211 of busbar assembly 21 forming the lower layer; and insulating plate 40 of busbar assembly 20 forming the upper layer partially overlaps busbar 212 of busbar assembly 21 forming the lower layer. Such a configuration of the insulating plate can support the busbar of the busbar assembly forming the adjacent layer; this promotes elimination of a support for supporting the busbars in the electrical connection device, and can thus save installation space, reducing costs.

For example, the insulating plates may be made of a material with high strength and high insulating resistance, for example resin, such as glass fibre epoxy resin.

Returning to Figs. 1, 2 and 3, the integrated electrical connection device 100 further comprises electrical connectors, for electrically connecting the busbars to the electrical components. As shown in Fig. 3, the electrical connector may comprise a connecting hole 60. Additionally or alternatively, the electrical connector may comprise a connecting boss 61, which protrudes from a surface of the busbar, for example from the top surface of the integrated electrical connection device. For example, the connecting boss 61 may be a swage nut, which may be installed in the connecting hole 60. Electrical connectors of different types increase the flexibility of electrical connection between the busbars and the electrical components.

In addition, some of the connecting holes 60 are also used for assembly of the busbar assemblies forming different layers, for example by means of swage nuts installed therein.

As shown in Fig. 3, the busbars of each layer in the busbar assemblies 20, 21 forming multiple layers have exposed terminals, which are electrically connected to interfaces on the housing 1, as shown in Figs. 1 and 2. Busbar 202 of busbar assembly 20 forming the upper layer has exposed terminals 73, 75, while busbar 203 has exposed terminal 71; busbar 211 of busbar assembly 21 forming the lower layer has exposed terminal 70, while busbar 212 has exposed terminals 72, 74. The exposed terminals may be extensions of the corresponding busbars. To facilitate installation, terminals 70 to 75 may lie in a different horizontal plane relative to the corresponding busbar.

A positive pole of interface 2 of the power distribution unit is electrically connected directly to exposed terminal 71 of busbar 203 of busbar assembly 20 forming the upper layer, a positive pole of interface 3 of the power distribution unit is electrically connected directly to exposed terminal 73 of busbar 202 of busbar assembly 20 forming the upper layer, and a positive pole of interface 4 of the power distribution unit is electrically connected to exposed terminal 75 of busbar 202 of busbar assembly 20 forming the upper layer via electrical component 6 in the form of a fuse. Busbar 203 is electrically connected to electrical component 8 in the form of a relay. Busbar 201 is electrically connected to electrical component 8 in the form of a relay, and electrically connected to busbar 202 via electrical component 7 in the form of a fuse.

A negative pole of interface 2 of the power distribution unit is electrically connected directly to exposed terminal 70 of busbar 211 of busbar assembly 21 forming the lower layer, a negative pole of interface 3 of the power distribution unit is electrically connected directly to exposed terminal 72 of busbar 212 of busbar assembly 21 forming the lower layer, and a negative pole of interface 4 of the power distribution unit is electrically connected directly to exposed terminal 74 of busbar 212. Busbar 212 is electrically connected to electrical component 9 in the form of a relay.

Electrical components 10, 11, 12 in the form of fuses electrically connect busbar 212 to busbar 202. As shown in Fig. 2, electrical components 10, 11, 12 in the form of fuses are located on the top insulating film 30. One end, electrically connected to busbar 212, of electrical component 10 in the form of a fuse is also electrically connected to positive poles of the on-board charger and the DC converter. One end, electrically connected to busbar 212, of electrical component 11 in the form of a fuse is also electrically connected to a positive pole of a compressor of the vehicle. One end, electrically connected to busbar 212, of electrical component 12 in the form of a fuse is also electrically connected to a positive pole of a battery pack heater of the vehicle. Busbar 212 is also electrically connected to negative poles of the on-board charger and the DC converter, the compressor and the battery pack heater respectively via the connecting holes 60 shown in the dotted ellipse in Fig. 9.

It should be noted that, as shown in Figs. 6, 8 and 10, openings for exposing corresponding busbars and openings for installing electrical components are provided on at least one or all of insulating film 31 and the other insulating films 30 and 32. Correspondingly, the busbar assembly forming each layer also has openings for installing electrical components.

As described above, the integrated electrical connection device of the present disclosure employs a layered design in which busbars alternate with insulating material, optimizing the circuit layout and connections of the electric drive system, reducing the safe distance between busbars, and thus being simple and compact in structure and easy to assemble. In addition, the integrated electrical connection device of the present disclosure employs an integrated structure, avoiding the risk of installation mistakes due to an installation sequence. Further, the integrated electrical connection device of the present disclosure employs thin and wide metal plates as busbars, and is designed so that current directions are opposite in adjacently overlapping busbars, which reduces parasitic inductance and impedance, and gives better heat dissipation performance, resulting in high reliability and safety.

A power distribution unit of the present disclosure comprises the integrated electrical connection device 100 as described in any one of the embodiments above. As described above, the electrical components of the power distribution unit of the present disclosure may comprise relays and fuses, and the number of these depends on the particular application. It should be understood that the power distribution unit of the present disclosure also has the advantages described above in relation to the integrated electrical connection device 100.

An electric drive system of the present disclosure comprises the power distribution unit as described in any one of the embodiments above, and also comprises an electric motor, an on-board charger, an inverter, etc. It should be understood that the electric drive system of the present disclosure also has the advantages described above in relation to the integrated electrical connection device and the power distribution unit.

A vehicle of the present disclosure comprises the electric drive system described above. The vehicle may be an electrified vehicle, such as a battery electric vehicle (BEV), a hybrid electric vehicle (HEV), a plug-in hybrid electric vehicle (PHEV) or a range-extended electrified vehicle (REEV). The vehicle may also be a hydrogen-powered vehicle. It should be understood that the vehicle of the present disclosure also has the advantages described above in relation to the integrated electrical connection device, the power distribution unit and the electric drive system.

Moreover, the technical features disclosed above are not limited to the disclosed combinations with other features, and those skilled in the art could also combine technical features in other ways according to the disclosed objective, to achieve the objective of the present disclosure.

## Claims

1. An integrated electrical connection device (100) for a power distribution unit, the power distribution unit comprising a housing (1), multiple interfaces (2, 3, 4) arranged on the housing, and multiple electrical components (5, 6, 7, 8, 9, 10, 11, 12) arranged in the housing, the integrated electrical connection device being arranged in the housing (1) and electrically connecting the multiple interfaces to the multiple electrical components, wherein
the integrated electrical connection device (100) comprises:
busbar assemblies (20, 21) forming multiple layers, the busbar assembly forming each layer comprising at least one busbar (201, 202, 203; 211, 212); and
an insulating film (31), arranged between busbar assemblies forming adjacent layers;
wherein a busbar of one layer of the busbar assemblies (20, 21) forming multiple layers, and a busbar of another adjacent layer of the busbar assemblies forming multiple layers, at least partially overlap each other and have opposite current directions.

2. The integrated electrical connection device according to claim 1, wherein the insulating film (30, 31, 32) is adhesively bonded to a busbar assembly forming a corresponding layer.

3. The integrated electrical connection device according to claim 1, wherein at least one layer of the busbar assemblies (20, 21) forming multiple layers further comprises an insulating plate (40, 41; 42, 43, 44).

4. The integrated electrical connection device according to claim 1, wherein the insulating plate is arranged between busbars of a busbar assembly forming a corresponding layer.

5. The integrated electrical connection device according to claim 3 or 4, wherein the insulating plate partially overlaps at least one busbar of a busbar assembly forming an adjacent layer.

6. The integrated electrical connection device according to claim 1, wherein the integrated electrical connection device (100) further comprises an electrical connector, for electrically connecting the busbar to the electrical component.

7. The integrated electrical connection device according to claim 6, wherein the electrical connector comprises a connecting hole (60).

8. The integrated electrical connection device according to claim 6, wherein the electrical connector comprises a connecting boss (61).

9. The integrated electrical connection device according to claim 1, wherein a busbar of each layer of the busbar assemblies (20, 21) forming multiple layers has an exposed terminal (70, 71, 72, 73, 74, 75) electrically connected to the interface.

10. A power distribution unit, comprising the integrated electrical connection device according to any one of claims 1 - 9.

11. The power distribution unit according to claim 10, wherein the electrical components comprise a relay and a fuse.

12. An electric drive system, comprising the power distribution unit according to claim 10 or 11.

13. A vehicle, comprising the electric drive system according to claim 12.
